# FASCICULE DE BREVET EUROPEEN

(11) **EP 1 676 042 B1**
(45) Date de publication et mention de la délivrance du brevet: **27.08.2008**
(21) Numéro de dépôt: 04805751.7
(22) Date de dépôt: 18.10.2004
(51) Int. Cl.: F16D 21/06, F16D 13/71

(54) **EMBRAYAGE, NOTAMMENT POUR VEHICULE AUTOMOBILE, ET PROCEDE DE MONTAGE DE CET EMBRAYAGE**
KUPPLUNG, INSBESONDERE FÜR EIN KRAFTFAHRZEUG, UND VERFAHREN ZUR MONTAGE DER KUPPLUNG
CLUTCH, IN PARTICULAR FOR A MOTOR VEHICLE AND METHOD FOR ASSEMBLING SAID CLUTCH

(30) Priorité: 21.10.2003 FR 0350713
(43) Date de publication de la demande: 05.07.2006
(73) Titulaire: Valeo Embrayages, 80009 Amiens (FR)
(72) Inventeur: THIBAUT, François, F-80330 LONGUEAU (FR); THERY, Pascal, F-80000 AMIENS (FR)
(74) Mandataire: Doressamy, Clarisse
(86) Numéro de dépôt international: PCT/FR2004/050508
(87) Numéro de publication internationale: WO 2005/040628

(56) Documents cités:
- FR-A- 2 837 887
- US-A1- 2002 060 118
- US-A1- 2003 164 274

## Description

La présente invention concerne un embrayage, notamment pour véhicule automobile, et un procédé de montage de cet embrayage.

Dans un véhicule automobile, l'embrayage, de type simple ou double, est destiné à coupler des organes rotatifs menant et mené d'axes de rotation sensiblement alignés. L'organe rotatif menant est couplé au moteur, plus particulièrement à un vilebrequin du moteur. L'embrayage comporte au moins un mécanisme entraîné en rotation par l'organe menant. Ce mécanisme comprend un couvercle, un diaphragme et un plateau de pression tous liés en rotation avec l'organe menant.

Pour coupler les organes rotatifs menant et mené, le diaphragme enserre un disque de friction, lié en rotation avec l'organe rotatif mené, entre le plateau de pression et un plateau de réaction solidaire en rotation du couvercle.

Le diaphragme est généralement manoeuvré par une butée de commande qui peut être de type poussé ou tiré. Cette butée de commande est habituellement commandée par une fourchette articulée sur un carter fixe de la transmission du véhicule ou par un vérin hydraulique.

On connaît déjà dans l'état de la technique, notamment d'après DE 102 34 548 et US 2003/164274 A1 , un embrayage, notamment pour véhicule automobile, du type destiné à coupler des organes rotatifs menant et mené d'axes de rotation sensiblement alignés, comprenant :
- des moyens de commande de l'embrayage susceptibles d'exercer une poussée axiale dans le sens organe mené vers organe menant en prenant appui sur un support, et
- un roulement destiné à relier au support d'appui un couvercle rotatif, couplé à l'organe menant, pour transmettre à ce support d'appui des efforts subis par le couvercle lorsque les moyens de commande exercent leur poussée axiale dans le sens organe mené vers organe menant.

Dans ce type d'embrayage, la commande est dite de type poussé car elle exerce sur le mécanisme de l'embrayage une poussée axiale dans le sens organe mené vers organe menant. Dans le cas de moyens de commande comprenant une butée de commande actionnée par une fourchette, cette dernière prend appui généralement sur un carter fixe de transmission formant le support d'appui. Dans le cas de moyens de commande comprenant une butée de commande actionnée par un vérin hydraulique, le support d'appui est formé par le corps du vérin.

Il est nécessaire d'éviter que les efforts dus à la poussée axiale soient transmis au vilebrequin, ce dernier n'étant en général pas adapté pour subir des efforts axiaux importants. Par ailleurs, le vilebrequin est en général couplé à un volant moteur, auquel est relié l'embrayage, par un élément de liaison, par lequel devraient passer ces efforts transmis au vilebrequin. Cet élément de liaison, fabriqué généralement en tôle, a une faible épaisseur, afin de permettre des flexions axiales. Ainsi, si les efforts passaient par cet élément de liaison, celui ci subirait des contraintes importantes qui nuiraient à sa durée de vie.

Dans certains cas, le volant moteur est du type double volant amortisseur. Un double volant amortisseur comporte habituellement un volant primaire entraînant en rotation un volant secondaire par l'intermédiaire d'un amortisseur à ressorts. Le double volant amortisseur comporte en outre un palier de centrage du volant secondaire sur le volant primaire. Si les efforts exercés par la butée de commande étaient transmis au vilebrequin, ces efforts devraient alors passer par ce palier de centrage, qui devrait alors être dimensionné en conséquence afin de ne pas subir une usure prématurée.

Le roulement reliant le couvercle rotatif au support d'appui est destiné à renvoyer l'effort reçu par le mécanisme vers ce support d'appui afin d'éviter la transmission de cet effort au vilebrequin du moteur lié à l'organe menant.

Dans DE 102 34 548, le roulement est monté dans le couvercle par déplacement relatif de ce roulement dans le sens organe menant vers organe mené, de manière à venir en appui contre un épaulement interne du couvercle.

L'invention a notamment pour but de permettre le montage du roulement dans le sens opposé à celui de l'état de la technique, c'est-à-dire par déplacement relatif de ce roulement dans le sens organe mené vers organe menant.

A cet effet, l'invention a pour objet un embrayage du type précité, caractérisé en ce que le roulement et le couvercle comprennent des moyens complémentaires d'emboîtement axial par déplacement du roulement par rapport au couvercle dans le sens organe mené vers organe menant, l'embrayage comprenant de plus des moyens anti-déboîtement s'opposant au déboîtement des roulement et couvercle par déplacement relatif dans le sens organe menant vers organe mené.

Les moyens complémentaires d'emboîtement axial permettent le montage du roulement par déplacement de ce roulement par rapport au couvercle dans le sens organe mené vers organe menant, les moyens anti-déboîtement permettant au roulement de prendre appui sur le couvercle lorsqu'il est sollicité dans le sens opposé au précédent.

Un embrayage selon l'invention peut en outre comporter l'une ou plusieurs des caractéristiques suivantes :
- le couvercle comporte une paroi transversale, sensiblement perpendiculaire aux axes de rotation des organes menant et mené, formant surface d'appui pour le roulement ;
- les moyens anti-déboîtement comprennent des saillies radiales anti-déboîtement solidaires du roulement, le couvercle comportant des encoches radiales susceptibles de permettre le passage des saillies radiales lors de l'emboîtement axial par déplacement du roulement par rapport au couvercle dans le sens organe mené vers organe menant ;
- le couvercle comprend une paroi annulaire sensiblement axiale dans laquelle le roulement est destiné à être logé ;
- le roulement est monté en baïonnette dans un logement délimité par la paroi annulaire, les saillies radiales d'anti-déboîtement étant susceptibles de prendre appui sur la paroi transversale du couvercle après emboîtement de ces saillies radiales dans les encoches radiales et déplacement angulaire relatif de ces saillies angulaires et encoches radiales ;
- les moyens d'anti-déboîtement comportent des moyens d'anti-rotation du roulement maintenant les saillies radiales d'anti-déboîtement dans une position décalée par rapport aux encoches radiales de la paroi transversale du couvercle;
- les moyens anti-déboîtement comportant un organe, rapporté autour de la paroi axiale, formant un collet s'intercalant axialement entre les saillies radiales emboîtées et les encoches radiales pour empêcher un déboîtement axial par déplacement du roulement par rapport au couvercle dans le sens organe menant vers organe mené ;
- l'organe rapporté formant collet est un organe annulaire, par exemple fendu, déformable élastiquement entre des configurations de repos et de serrage autour de la paroi annulaire de logement du roulement ;
- l'embrayage comporte des moyens formant butée, dits moyens anti-expansion, s'opposant à l'expansion élastique radiale de l'organe formant collet ;
- les moyens anti-expansion sont ménagés sur le couvercle et comprennent, par exemple, un bossage annulaire ;
- les moyens anti-expansion sont ménagés sur les saillies radiales anti-déboîtement du roulement et sont formés, par exemple, par des extrémités libres recourbées de ces saillies anti-déboîtement ;
- le roulement comporte une bague extérieure, les saillies radiales anti-déboîtement étant portées par cette bague extérieure ;
- la bague extérieure du roulement est en tôle, les saillies radiales anti-déboîtement étant venues de matière avec la bague extérieure ;
- le roulement comporte une bague intérieure portant des moyens de fixation de ce roulement sur le support d'appui ;
- la bague intérieure du roulement est en tôle, les moyens de fixation étant de préférence également en tôle ;
- les moyens de fixation sont rapportés sur la bague intérieure du roulement par soudage ;
- les moyens de fixation sont rapportés sur la bague intérieure du roulement par sertissage ;
- les moyens de fixation sont rapportés sur la bague intérieure du roulement par collage ;
- le support d'appui est un carter fixe ;
- le support d'appui est un organe libre axialement portant les moyens de commande de l'embrayage ;
- le support d'appui est un corps de vérin hydraulique formant une commande de l'embrayage ;
- l'organe menant est couplé à un moteur rotatif ;
- que l'organe menant est un volant moteur, couplé à un vilebrequin du moteur rotatif du véhicule automobile par l'intermédiaire d'un élément de liaison de faible épaisseur ;
- que l'organe menant est un double volant amortisseur, comportant un volant primaire entraînant en rotation un volant secondaire par l'intermédiaire d'un amortisseur à ressorts, ce double volant amortisseur comportant en outre un palier de centrage du volant secondaire sur le volant primaire.
- l'organe mené est un arbre de boîte de vitesses ;
- l'organe menant est couplé à l'organe mené lorsque les moyens de commande sont activés et l'organe menant est découplé de l'organe mené lorsque les moyens de commande ne sont pas activés ;
- l'embrayage est un double embrayage.

L'invention a également pour objet un procédé de montage d'un embrayage tel que défini ci-dessus, **caractérisé en ce que :**
- on introduit le roulement dans le couvercle, en emboîtant axialement les moyens complémentaires d'emboîtement par déplacement du roulement par rapport au couvercle dans le sens organe mené vers organe menant,
- puis on monte les moyens anti-déboîtement dans le couvercle de façon à permettre au roulement de prendre appui sur ce couvercle lorsqu'il est sollicité dans un sens opposé au précédent.

L'invention sera mieux comprise à la lecture de la description qui va suivre, donnée uniquement à titre d'exemple et faite en se référant aux dessins dans lesquels :
- la figure 1 est une vue en coupe axiale d'un double embrayage selon un premier mode de réalisation de l'invention ;
- la figure 2 est une vue en coupe axiale du roulement de l'embrayage visible sur la figure 1 ;
- la figure 3 est une vue de face du roulement de la figure 2 ;
- la figure 4 est une vue similaire à celle de la figure 2, d'une variante de réalisation du roulement ;
- la figure 5 est une première variante de réalisation d'un détail de l'embrayage de la figure 1 ;
- la figure 6 est une seconde variante de réalisation de ce détail de l'embrayage de la figure 1 ;
- les figure 7 et 8 sont des vues similaires aux figures 5 et 6 montrant un second mode de réalisation d'un double embrayage selon l'invention ;
- la figure 9 est une vue de face d'une encoche représentée sur les figures 7 et 8.

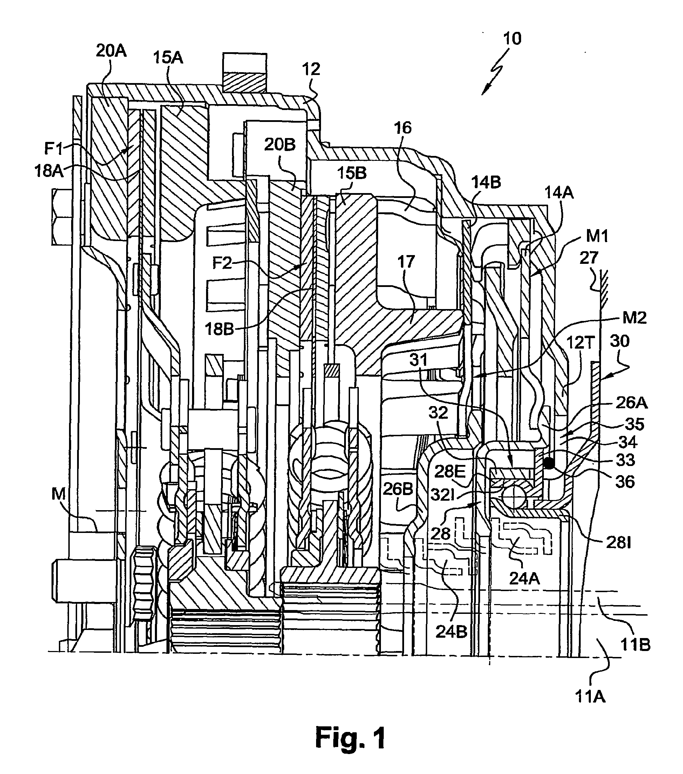

On a représenté sur la figure 1 un double embrayage pour véhicule automobile, désigné par la référence générale 10. Ce double embrayage 10 est destiné a coupler alternativement un organe rotatif menant M avec deux organes rotatifs menés d'axes de rotation sensiblement alignés.

En général, cet organe menant M est couplé à un vilebrequin du moteur rotatif du véhicule automobile, et les deux organes menés sont des arbres 11A, 11B de boîte de vitesses correspondant à des rapports de vitesses de parités différentes.

Le double embrayage 10 comporte un couvercle 12, couplé à l'organe rotatif menant M, dans lequel sont logés deux embrayages de passage de rapports de parités différentes. Ces embrayages comprennent respectivement des premier M1 et second M2 mécanismes destinés à agir sur des première F1 et seconde F2 frictions.

Les mécanismes M1, M2 comprennent respectivement des premier 14A et second 14B diaphragmes destinés à coopérer avec des premier 15A et second 15B plateaux de pression solidaires en rotation du couvercle 12.

Le premier diaphragme 14A coopère avec le premier plateau de pression 15A par l'intermédiaire d'un organe mobile 16 d'entretoisement axial. Le second diaphragme 14B coopère avec le second plateau de pression 15B par l'intermédiaire d'une saillie annulaire 17, continue ou discontinue, solidaire de ce second plateau de pression 15B.

Les frictions F1, F2 comprennent respectivement des premier 18A et second 18B disques de friction.

Chaque plateau de pression 15A, 15B est susceptible, lorsqu'il est sollicité par le diaphragme 14A, 14B correspondant, d'enserrer l'un des disques de friction 18A, 18B entre ce plateau de pression 15A, 15B et un plateau de réaction correspondant 20A, 20B, solidaire en rotation de l'organe menant M et du couvercle 12.

Les deux disques de friction 18A, 18B portent des cannelures, coopérant avec des cannelures complémentaires agencées respectivement sur les deux organes menés 11A, 11B de manière à ce que ces disques de friction 18A, 18B soient liés en rotation respectivement à ces deux organes menés 11A, 11 B.

La commande des premier et second embrayages se fait au moyen de première 24A et seconde 24B butées de commande classiques, coopérant chacune avec le diaphragme 14A, 14B correspondant par l'intermédiaire d'un organe de transmission d'effort 26A, 26B.

En variante, ces organes de transmission d'effort 26A, 26B peuvent être portés respectivement par des première 24A et seconde 24B butées de commande. En effet, ces butées de commande comprennent en général chacune un roulement à billes muni de bagues intérieure et extérieure, par exemple en tôle. L'une de ces bagues peut être prolongée de manière à former un organe de transmission d'effort.

Les butées de commande 24A, 24B sont actionnées par des moyens (non représentés) susceptibles d'exercer une poussée axiale dans le sens organe mené 11A, 11 B vers organe menant M en prenant appui sur un support d'appui 27.

Dans le mode de réalisation illustré sur les figures, le support d'appui 27 est un carter fixe et les moyens d'actionnement des butées de commande 24A, 24B comportent des fourchettes de commande classiques formant des leviers articulés sur le support d'appui 27. Ces fourchettes coopèrent de façon connue en soi avec les butées de commande 24A, 24B.

En variante, le support d'appui 27 peut être un organe libre axialement par rapport au carter fixe.

Selon cette variante, les moyens d'actionnement des butées de commande 24A, 24B peuvent comporter des vérins hydrauliques annulaires de commande, concentriques aux organes menés 11A, 11B. Le support d'appui est dans ce cas formé par le corps d'un des vérins qui est généralement libre axialement par rapport au carter fixe.

Dans les mode de réalisations illustrés sur les figures, le double embrayage 10 est du type dans lequel l'organe menant M est couplé à l'organe mené 11A, 11B lorsque les moyens de commande, notamment les butées 24A, 24B, sont activés et l'organe menant M est découplé de l'organe mené 11A, 11B lorsque les moyens de commande 24A, 24B ne sont pas activés.

On notera que chaque diaphragme 14A, 14B forme un levier muni d'un bord radialement externe d'articulation et d'un bord radialement interne de coopération avec l'organe de transmission d'effort 26A, 26B correspondant.

Ce levier est du second genre car la zone du diaphragme 14A, 14B qui coopère avec l'organe mobile d'entretoisement 16, en appui sur le premier plateau de pression 15A, ou qui coopère avec la saillie 17 du second plateau de pression 15B, est située radialement entre le bord externe d'articulation et le bord interne de coopération avec l'organe de transmission d'effort 26A, 26B correspondant.

Un tel levier permet de démultiplier la force appliquée par la butée de commande 24A, 24B et de la transmettre au plateau de pression correspondant 15A, 15B. Cette force est ensuite transmise au plateau de réaction 20A, 20B qui est fixé sur le couvercle 12.

Les efforts exercés par la butée de commande 24A, 24B sont donc transmis au couvercle 12. Afin d'éviter que les efforts soient transmis au vilebrequin du moteur, à un organe de liaison de ce vilebrequin à l'organe menant M, ou à l'organe menant M s'il s'agit d'un double volant amortisseur, on prévoit un roulement 28 destiné à être relié par des moyens de fixation 30 au support d'appui 27.

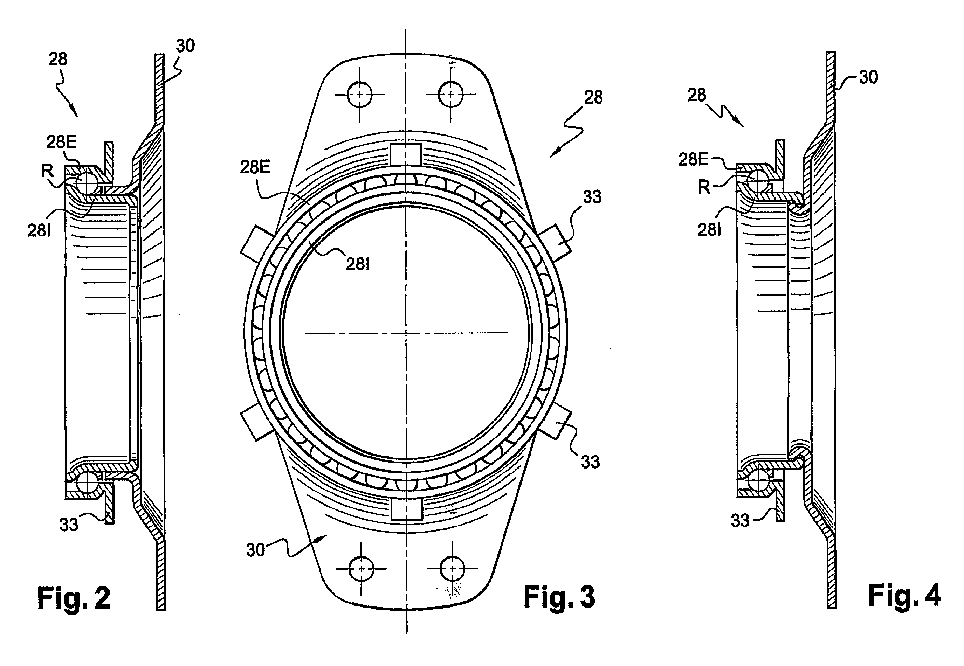

Ce roulement 28, représenté plus en détail sur les figures 2 et 3, renvoie au support d'appui 27 les efforts subis par le couvercle 12 lorsque les butées de commande 24A, 24B exercent leur poussée axiale.

Le roulement 28 est de préférence à contacts obliques et comprend des bagues radialement intérieure 281 et extérieure 28E, entre lesquelles sont intercalés des éléments de roulement, plus particulièrement des billes R. De préférence, ces bagues intérieure 281 et extérieure 28E sont en tôle.

Les moyens de fixation 30, de préférence en tôle, sont rapportés sur la bague intérieure 28I du roulement 28, par exemple par soudage (voir figure 2), par sertissage (voir figure 4) ou encore par collage.

En se référant à la figure 1, on voit que le couvercle 12 et le roulement 28 comprennent des moyens complémentaires 31 d'emboîtement axial comportant une paroi annulaire 32, sensiblement axiale, solidaire du couvercle 12, formant logement pour le roulement 28. Une surface radialement extérieure de la bague extérieure 28E du roulement 28 est destinée à coopérer par emboîtement avec une surface radialement intérieure 321 de la paroi annulaire 32.

On notera que l'encombrement radial des moyens de fixation 30 (comportant notamment deux ailes de fixation sur le support d'appui 27 diamétralement opposées, comme cela est visible sur la figure 3) est supérieur à l'encombrement radial du roulement 28 et au diamètre intérieur de la paroi annulaire 32.

Toutefois, le roulement 28 est susceptible d'être emboîté axialement dans la paroi annulaire 32 du couvercle 12 par déplacement de ce roulement 28 par rapport au couvercle 12 dans le sens organes menés 11A, 11B vers organe menant M.

On décrira ci dessous des moyens de l'embrayage 10 permettant au roulement 28 de prendre appui sur une face interne, tournée vers l'organe menant M, délimitant une paroi sensiblement transversale du couvercle 12, et ainsi d'éviter, lorsque les butées de commande 24A, 24B sont activées, le déboîtement du roulement 28 par déplacement par rapport au couvercle 12 dans le sens organe menant M vers organes menés 11A, 11B.

Le roulement 28 comprend des saillies radiales anti-déboîtement 33, par exemple des pattes 33, portées par la bague extérieure 28E du roulement 28 (voir notamment la figure 3). En général, les saillies anti-déboîtement 33 sont venues de matière avec cette bague extérieure 28E.

Par ailleurs, le couvercle 12 comporte une paroi transversale 12T, sensiblement perpendiculaire aux axes de rotation des organes menant M et mené 11A, 11B. Des encoches radiales 34 sont ménagées dans cette paroi transversale 12T. Ces encoches radiales 34 autorisent le passage des saillies radiales 33 à travers le couvercle 12 lors de l'emboîtement du roulement 28 dans la paroi annulaire 32 par déplacement de ce roulement 28 par rapport au couvercle 12 dans le sens organes menés 11A, 11 B vers organe menant M.

On notera que les encoches radiales 34 se prolongent axialement dans la paroi annulaire 32.

Dans un premier mode de réalisation de l'invention, l'embrayage 10 comprend de plus des moyens anti-déboîtement 35 destinés à être rapportés autour de la paroi annulaire 32 après emboîtement du roulement 28 dans un logement délimité par cette dernière.

Ces moyens anti-déboîtement 35 comportent un organe 36, rapporté autour de la paroi axiale 32, formant un collet s'intercalant axialement entre les saillies radiales 33 et la face interne de la paroi transversale 12T du couvercle 12 dans laquelle sont ménagées les encoches radiales 34.

L'organe 36 formant collet est de préférence un organe annulaire, par exemple fendu, déformable élastiquement entre une configuration de repos et une configuration de serrage, autour de la paroi annulaire 32 de logement du roulement 28, telle que représentée sur la figure 1.

Lorsque les butées de commande 24A, 24B sont activées, les saillies anti-déboîtement 33 et l'organe 36 formant collet sont sollicités dans le sens organe menant M vers organes menés 11A, 11B. Les saillies anti-déboîtement 33 prennent appui sur l'organe 36 formant collet, ce dernier prenant appui sur la face interne de la paroi transversale 12T du couvercle 12 afin d'empêcher un déboîtement axial du roulement 28.

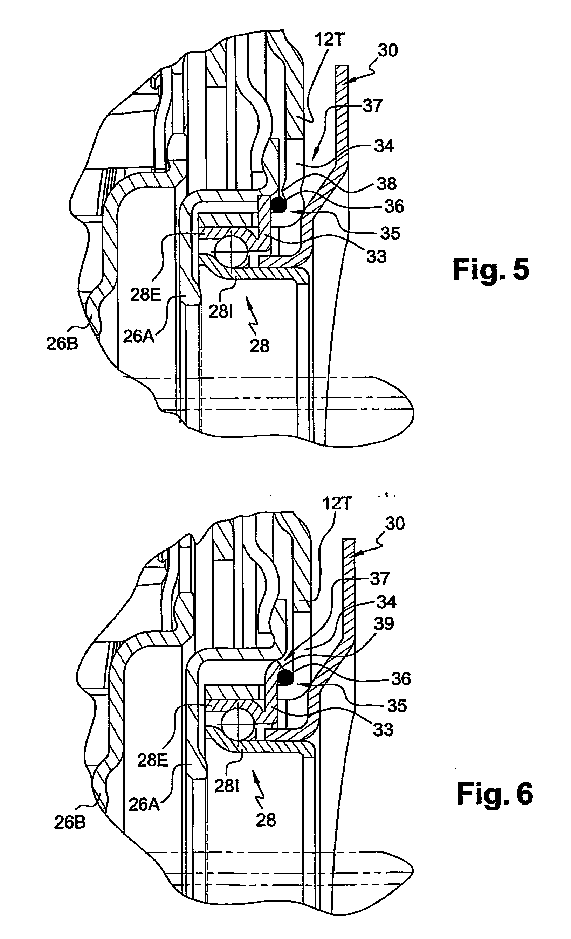

On a représenté sur les figures 5 et 6 des première et seconde variantes de réalisation de ce mode de réalisation de l'invention.

Ces variantes prévoient des moyens formant butée, dits moyens anti-expansion 37, s'opposant à l'expansion élastique radiale de l'organe 36 formant collet. Les moyens anti-expansion 37 empêchent ainsi une expansion de l'organe élastique 36 sous l'effet de la force centrifuge engendrée par la rotation du couvercle 12.

Dans la variante représentée sur la figure 5, ces moyens anti-expansion 37 sont ménagés sur le couvercle 12 et comprennent un bossage annulaire 38.

Dans la variante représentée sur la figure 6, les moyens anti-expansion 37 sont ménagés sur les saillies radiales 33 d'emboîtement du roulement 28 et sont formés par des extrémités libres 39 recourbées de ces saillies d'emboîtement 33.

Dans une troisième variante, non représentée, les moyens anti-expansion 37 peuvent être formés par une pièce rapportée, par exemple fixée sur le couvercle.

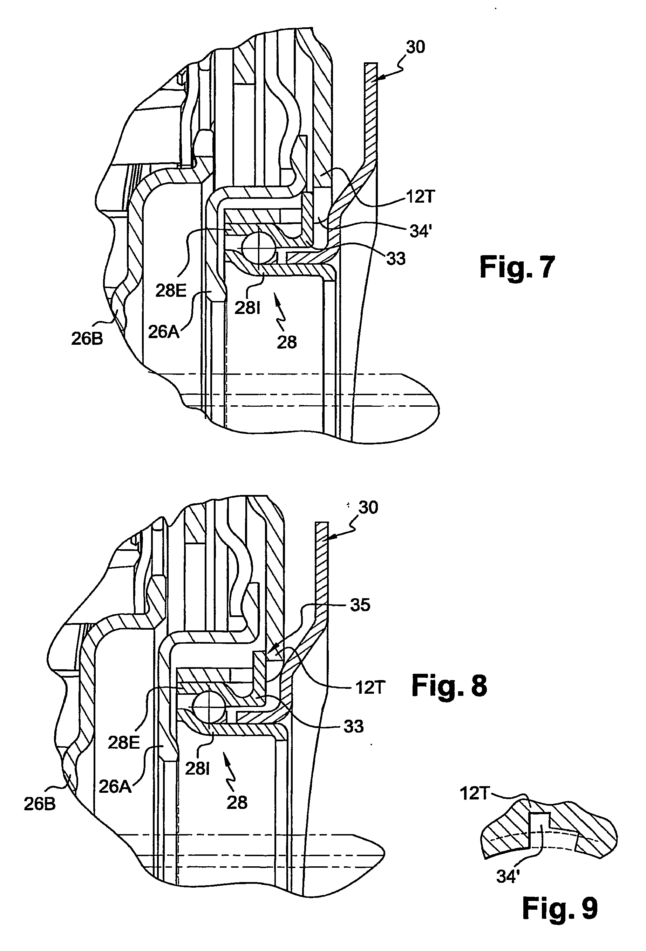

Dans un second mode de réalisation, représenté sur les figures 7 à 9, le roulement 28 est monté en baïonnette dans le logement délimité par la paroi axiale 32.

La paroi transversale 12T du couvercle 12 est munie d'encoches 34' en forme de « L » (voir figure 9). Une branche de ce « L », s'étendant radialement, permet le passage des saillies radiales 33 lors de l'introduction du roulement 28 (voir figure 7).

Après emboîtement de ces saillies radiales 33 dans les encoches radiales 34' et déplacement angulaire relatif de ces saillies 33 et encoches 34', les saillies 33 ne se trouvent plus face à la branche radiale du « L » de l'encoche 34', et prennent alors appui sur la paroi transversale 12T du couvercle 12 (voir figure 8), formant ainsi moyen d'anti-déboîtement 35.

De préférence, ces moyens d'anti-déboîtement 35 comportent des moyens d'anti-rotation (non représentés) du roulement 28 maintenant les saillies radiales d'anti-déboîtement 33 dans une position décalée angulairement par rapport aux encoches radiales 34' de la paroi transversale 12T du couvercle 12.

Le second mode de réalisation permet, par rapport au premier mode de réalisation, un gain en encombrement axial correspondant à l'épaisseur de l'organe rapporté 36.

On notera qu'un tel embrayage 10 selon l'invention peut être monté en introduisant le roulement 28 dans le couvercle 12 par déplacement de ce roulement 28 par rapport au couvercle 12 dans le sens organe mené 11A, 11B vers organe menant M.

En effet, conformément à un procédé de montage selon l'invention, tout d'abord, on introduit le roulement 28 dans le couvercle 12, en emboîtant axialement les moyens complémentaires d'emboîtement 31 par déplacement du roulement 28 par rapport au couvercle 12 dans le sens organe mené 11A, 11 B vers organe menant M.

Selon le premier mode de réalisation de l'invention, on monte ensuite les moyens anti-déboîtement 35 dans le couvercle 12, de façon à permettre au roulement 28 de prendre appui sur la paroi transversale 12T de ce couvercle 12 lorsqu'il est sollicité dans un sens opposé au précédent. En effet, l'organe 36 prend appui sur la face interne de cette paroi transversale 12Tdu couvercle 12.

Selon le second mode de réalisation de l'invention, le roulement 28 est monté en baïonnette. Après introduction du roulement 28 dans le logement délimité par la paroi axiale 32, on effectue une rotation de ce roulement 28 par rapport au couvercle 12 de manière à ce que les saillies radiales 33 du roulement ne soient plus en face de la branche radiale de l'encoche 34'. Ainsi, le roulement 28 peut prendre appui sur la paroi transversale 12T du couvercle 12 lorsqu'il est sollicité dans un sens opposé au sens de montage, puisque les saillies radiales 33 prennent appui sur la paroi radiale 12T du couvercle 12.

Un tel procédé de montage permet aux moyens de fixation 30, dont l'encombrement radial est supérieur à celui du roulement 28, de s'étendre à l'extérieur du couvercle 12, aussi bien avant l'emboîtement du roulement 28 dans le couvercle 12 qu'après emboîtement de ce roulement 28 dans le couvercle 12.

L'invention ne se limite pas aux exemples décrits ci-dessus. En particulier, à la différence des exemples illustrés, l'invention peut s'appliquer à un double embrayage comprenant au moins un embrayage du type dans lequel l'organe menant M est découplé de l'organe mené 11A, 11 B lorsque les moyens de commande 24A, 24B sont activés et l'organe menant M est couplé à l'organe mené 11A, 11 B lorsque les moyens de commande 24A, 24B ne sont pas activés.

## Revendications

1. Embrayage (10), notamment pour véhicule automobile, destiné à coupler des organes rotatifs menant (M) et mené (11A, 11 B) d'axes de rotation sensiblement alignés, du type comprenant :
- des moyens (24A, 24B) de commande de l'embrayage (10) susceptibles d'exercer une poussée axiale dans le sens organe mené (11A, 11 B) vers organe menant (M) en prenant appui sur un support (27), et
- un roulement (28) destiné à relier au support d'appui (27) un couvercle (12) rotatif, couplé à l'organe menant (M), pour transmettre à ce support d'appui (27) des efforts subis par le couvercle (12) lorsque les moyens de commande (24A, 24B) exercent leur poussée axiale dans le sens organe mené (11A, 11B) vers organe menant (M),
**caractérisé en ce que** le roulement (28) et le couvercle (12) comprennent des moyens complémentaires (31) d'emboîtement axial par déplacement du roulement (28) par rapport au couvercle (12) dans le sens organe mené (11A, 11B) vers organe menant (M), l'embrayage (10) comprenant de plus des moyens anti-déboîtement (33, 35) s'opposant au déboîtement des roulement (28) et couvercle (12) par déplacement relatif dans le sens organe menant (M) vers organe mené (11A, 11B).

2. Embrayage (10) selon la revendication 1, **caractérisé en ce que** le couvercle (12) comporte une paroi transversale (12T), sensiblement perpendiculaire aux axes de rotation des organes menant (M) et mené (11A, 11B), formant surface d'appui pour le roulement (28).

3. Embrayage (10) selon la revendication 2, **caractérisé en ce que** les moyens anti-déboîtement (35) comprennent des saillies radiales anti-déboîtement (33) solidaires du roulement (28), la paroi transversale (12T) du couvercle (12) comportant des encoches radiales (34, 34') susceptibles de permettre le passage des saillies radiales (33) lors de l'emboîtement axial par déplacement du roulement (28) par rapport au couvercle (12) dans le sens organe mené (11A, 11 B) vers organe menant (M).

4. Embrayage (10) selon l'une quelconque des revendications précédentes, **caractérisé en ce que** le couvercle (12) comprend une paroi annulaire (32) sensiblement axiale dans laquelle le roulement (28) est destiné à être logé.

5. Embrayage (10) selon les revendication 3 et 4 prises ensemble, **caractérisé en ce que** le roulement (28) est monté en baïonnette dans un logement délimité par la paroi annulaire (32), les saillies radiales d'anti-déboîtement (33) étant susceptibles de prendre appui sur la paroi transversale (12T) du couvercle (12) après emboîtement de ces saillies radiales (33) dans les encoches radiales (34') et déplacement angulaire relatif de ces saillies angulaires (33) et encoches radiales (34').

6. Embrayage (10) selon la revendication 5, **caractérisé en ce que** les moyens d'anti-déboîtement (35) comportent des moyens d'anti-rotation du roulement (28) maintenant les saillies radiales (33) d'anti-déboîtement dans une position décalée angulairement par rapport aux encoches radiales (34) de la paroi transversale (12T) du couvercle (12).

7. Embrayage (10) selon les revendication 3 et 4 prises ensemble, **caractérisé en ce que** les moyens anti-déboîtement (35) comportent un organe (36), rapporté autour de la paroi axiale (32), formant un collet s'intercalant axialement entre les saillies radiales (33) emboîtées et les encoches radiales (34), en prenant appui sur la paroi transversale (12T) du couvercle (12), pour empêcher un déboîtement axial par déplacement du roulement (28) par rapport au couvercle (12) dans le sens organe menant (M) vers organe mené (11A, 11B).

8. Embrayage (10) selon la revendication 7, **caractérisé en ce que** l'organe rapporté (36) formant collet est un organe annulaire, par exemple fendu, déformable élastiquement entre des configurations de repos et de serrage autour de la paroi annulaire (32) de logement du roulement (28).

9. Embrayage (10) selon la revendication 8, **caractérisé en ce qu'**il comporte des moyens (37) formant butée, dits moyens anti-expansion (37), s'opposant à l'expansion élastique radiale de l'organe (36) formant collet.

10. Embrayage (10) selon la revendication 9, **caractérisé en ce que** les moyens anti-expansion (37) sont ménagés sur le couvercle (12) et comprennent, par exemple, un bossage annulaire (38).

11. Embrayage (10) selon la revendication 9, **caractérisé en ce que** les moyens anti-expansion (37) sont ménagés sur les saillies radiales anti-déboîtement (33) du roulement (28) et sont formés, par exemple, par des extrémités libres (39) recourbées de ces saillies anti-déboîtement (33).

12. Embrayage (10) selon l'une quelconque des revendications 3 à 11, **caractérisé en ce que** le roulement (28) comporte une bague extérieure (28E), les saillies radiales anti-déboîtement (33) étant portées par cette bague extérieure (28E).

13. Embrayage (10) selon la revendication 12, **caractérisé en ce que** la bague extérieure (28E) du roulement (28) est en tôle, les saillies radiales anti-déboîtement (33) étant venues de matière avec la bague extérieure (28E).

14. Embrayage (10) selon l'une quelconque des revendications précédentes, **caractérisé en ce que** le roulement (28) comporte une bague intérieure (281) portant des moyens de fixation (30) de ce roulement (28) sur le support d'appui.

15. Embrayage (10) selon la revendication 14, **caractérisé en ce que** la bague intérieure (281) du roulement (28) est en tôle, les moyens de fixation (30) étant de préférence également en tôle.

16. Embrayage (10) selon la revendication 14 ou 15, **caractérisé en ce que** les moyens de fixation (30) sont rapportés sur la bague intérieure (281) du roulement (28) par soudage.

17. Embrayage (10) selon la revendication 14 ou 15, **caractérisé en ce que** les moyens de fixation (30) sont rapportés sur la bague intérieure (281) du roulement (28) par sertissage.

18. Embrayage (10) selon la revendication 14 ou 15, **caractérisé en ce que** les moyens de fixation (30) sont rapportés sur la bague intérieure (281) du roulement (28) par collage.

19. Embrayage (10) selon l'une quelconque des revendications 1 à 18, **caractérisé en ce que** le support d'appui (27) est un carter fixe.

20. Embrayage (10) selon l'une quelconque des revendications 1 à 18, **caractérisé en ce que** le support d'appui est un organe libre axialement portant les moyens de commande de l'embrayage.

21. Embrayage (10) selon l'une quelconque des revendications 1 à 18, **caractérisé en ce que** le support d'appui est un corps de vérin hydraulique formant une commande de l'embrayage (10).

22. Embrayage (10) selon l'une quelconque des revendications précédentes, **caractérisé en ce que** l'organe menant (M) est couplé à un moteur rotatif.

23. Embrayage (10) selon la revendication 22, **caractérisé en ce que** l'organe menant (M) est un volant moteur, couplé à un vilebrequin du moteur rotatif du véhicule automobile par l'intermédiaire d'un élément de liaison de faible épaisseur.

24. Embrayage (10) selon la revendication 23, **caractérisé en ce que** l'organe menant (M) est un double volant amortisseur, comportant un volant primaire entraînant en rotation un volant secondaire par l'intermédiaire d'un amortisseur à ressorts, ce double volant amortisseur comportant en outre un palier de centrage du volant secondaire sur le volant primaire.

25. Embrayage (10) selon l'une quelconque des revendications précédentes, **caractérisé en ce que** l'organe mené est un arbre (11A, 11B) de boîte de vitesses.

26. Embrayage (10) selon l'une quelconque des revendications précédentes, **caractérisé en ce que** l'organe menant (M) est couplé à l'organe mené (11A, 11B) lorsque les moyens de commande (24A, 24B) sont activés et l'organe menant (M) est découplé de l'organe mené (11A, 11B) lorsque les moyens de commande (24A, 24B) ne sont pas activés.

27. Embrayage (10) selon l'une quelconque des revendications précédentes, **caractérisé en ce qu'**il forme un double embrayage.

28. Procédé de montage d'un embrayage selon l'une quelconque des revendications précédentes, **caractérisé en ce que :**
- on introduit le roulement (28) dans le couvercle (12), en emboîtant axialement les moyens complémentaires d'emboîtement (31) par déplacement du roulement (28) par rapport au couvercle (12) dans le sens organe mené (11A, 11B) vers organe menant (M) ;
- puis on monte les moyens anti-déboîtement (35) dans le couvercle (12) de façon à permettre au roulement (28) de prendre appui sur ce couvercle lorsqu'il est sollicité dans un sens opposé au précédent.

## Claims

1. A clutch (10), especially for a motor vehicle, adapted to couple together a rotary driving member (M) and a rotary driven member (11A, 11B), the said rotary members having axes of rotation which are substantially aligned with each other and the clutch being of the type comprising:
- means (24A, 24B) for controlling the clutch (10) and adapted to exert an axial thrust in the direction from the driven member (11A, 11B) towards the driving member (M) while being engaged on a thrust support (27), and
- a rolling bearing (28) adapted to couple, to the thrust support (27), a rotatable cover plate (12) which is coupled to the driving member (M), whereby to transmit to the said thrust support (27) forces to which the cover plate (12) is subjected when the control means (24A, 24B) exert their axial thrust in the direction from the driven member (11A, 11B) towards the driving member (M),
**characterised in that** the rolling bearing (28) and the cover plate (12) include complementary axial insertion means (31), for insertion of the bearing (28) by displacement with respect to the cover plate (12) in the direction from the driven member (11A, 11B) to the driving member (M), the clutch (10) further including anti-separation means (33, 35) for preventing separation of the bearing (28) and cover plate (12) from each other by relative displacement in the direction from the driving member (M) towards the driven member (11A, 11 B).

2. A clutch (10) according to Claim 1, **characterised in that** the cover plate (12) includes a transverse wall portion (12T) which is substantially at right angles to the axes of rotation of the driving member (M) and driven member (11A, 11B), and which defines a thrust surface for the bearing (28).

3. A clutch (10) according to Claim 2, **characterised in that** the anti-separation means (35), comprise anti-separation radial projecting elements (33) fixed with respect to the rolling bearing (28), the transverse wall portion (12T) of the cover plate (12) including radial notches (34, 34') which are adapted to enable the radial projecting elements (33) to pass during the axial insertion by displacement of the bearing (28) with respect to the cover plate (12) in the direction from the driven member (11A, 11B) towards the driving member (M).

4. A clutch (10) according to any one of the preceding Claims, **characterised in that** the cover plate (12) includes a substantially axial annular wall portion (32) in which the rolling bearing (28) is arranged to be fitted.

5. A clutch (10) according to Claims 3 and 4 taken together, **characterised in that** the rolling bearing (28) is mounted in bayonet fashion in a housing delimited by the annular wall portion (32), the anti-separation radial projecting elements (33) being adapted to bear on the transverse wall portion (12T) of the cover plate (12) after the said radial projecting elements (33) have been inserted into the radial notches (34'), and after relative angular displacement of the said angular projecting elements (33) and radial notches (34').

6. A clutch (10) according to Claim 5, **characterised in that** the anti-separation means (35) comprise anti-rotation means of the bearing (28) for maintaining the anti-separation radial projecting elements (33) in a position which is circumferentially offset with respect to the radial notches (34) of the transverse wall portion (12T) of the cover plate (12).

7. A clutch (10) according to Claims 3 and 4 taken together, **characterised in that** the anti-separation means (35) comprise a member (36) which is fitted around the axial wall portion (32) and which constitutes a collar portion interposed axially between the nested radial projecting elements (33) and the radial notches (34), being engaged on the transverse wall portion (12T) of the cover plate (12), whereby to prevent axial separation by displacement of the rolling bearing (28) with respect to the cover plate (12) in the direction from the driving member (M) towards the driven member (11A, 11B).

8. A clutch (10) according to Claim 7, **characterised in that** the attached collar member (36) is an annular member which is for example of split form and which is deformable elastically between a rest configuration and a gripping configuration around the annular wall portion (32) of the housing of the rolling bearing (28).

9. A clutch (10) according to Claim 8, **characterised in that** it includes abutment means (37), referred to as anti-expansion means (37), for opposing radial elastic expansion of the collar member (36).

10. A clutch (10) according to Claim 9, **characterised in that** the anti-expansion means (37) are formed on the cover plate (12) and consist, for example, of an annular boss (38).

11. A clutch (10) according to Claim 9, **characterised in that** the anti-expansion means (37) are formed on the anti-separation radial projecting elements (33) of the rolling bearing (28), and consist for example of bent-over free end portions (39) of the said anti-separation projecting elements (33).

12. A clutch (10) according to any one of Claims 3 to 11, **characterised in that** the rolling bearing (28) includes an outer ring (28E), the anti-separation radial projecting elements (33) being carried by the said outer ring (28E).

13. A clutch (10) according to Claim 12, **characterised in that** the outer ring (28E) of the rolling bearing (28) is formed from metal plate, the anti-separation radial projecting elements (33) being formed integrally with the outer ring (28E).

14. A clutch (10) according to any one of the preceding Claims, **characterised in that** the rolling bearing (28) has an inner ring (28I) which carries means (30) for fastening the said bearing (28) on the thrust support.

15. A clutch (10) according to Claim 14, **characterised in that** the inner ring (28I) of the rolling bearing (28) is formed from metal plate, the fastening means (30) being preferably also formed from metal plate.

16. A clutch (10) according to Claim 14 or Claim 15, **characterised in that** the fastening means (30) are secured on the inner ring (28I) of the bearing (28) by welding.

17. A clutch (10) according to Claim 14 or Claim 15, **characterised in that** the fastening means (30) are secured on the inner ring (28I) of the bearing (28) by seaming.

18. A clutch (10) according to Claim 14 or Claim 15, **characterised in that** the fastening means (30) are secured on the inner ring (28I) of the bearing (28) by adhesive bonding.

19. A clutch (10) according to any one of Claims 1 to 18, **characterised in that** the thrust support (27) is a fixed casing.

20. A clutch (10) according to any one of Claims 1 to 18, **characterised in that** the thrust support is a member which is free in the axial direction and which carries the control means for the clutch.

21. A clutch (10) according to any one of Claims 1 to 18, **characterised in that** the thrust support is an hydraulic actuator body constituting a control means for the clutch (10).

22. A clutch (10) according to any one of the preceding Claims, **characterised in that** the driving member (M) is coupled to an engine for generating rotation.

23. A clutch (10) according to Claim 22, **characterised in that** the driving member (M) is an engine flywheel coupled to a crankshaft of the engine of the motor vehicle through a coupling element having a low thickness.

24. A clutch (10) according to Claim 23, **characterised in that** the driving member (M) is a damping double flywheel comprising a primary flywheel for driving a secondary flywheel in rotation through a damper having springs, the said double damping flywheel further including a bearing for centring the second flywheel on the primary flywheel.

25. A clutch (10) according to any one of the preceding Claims, **characterised in that** the driven member is a gearbox shaft (11A, 11 B).

26. A clutch (10) according to any one of the preceding Claims, **characterised in that** the driving member (M) is coupled to the driven member (11A, 11B) when the control means (24A, 24B) are activated and the driving member (M) is uncoupled from the driven member (11A, 11B) when the control means (24A, 24B) are not activated.

27. A clutch (10) according to any one of the preceding Claims, **characterised in that** it is a double clutch.

28. A method of assembling a clutch according to any one of the preceding Claims, **characterised in that:**
- the rolling bearing (28) is introduced into the cover plate (12) by inserting the complementary insertion means (31) axially by displacement of the rolling bearing (28) with respect to the cover plate (12) in the direction from the driven member (11A, 11 B) towards the driving member (M); and
- the anti-separation means (35) are then fitted in the cover plate (12) in such a way as to enable the rolling bearing (28) to come into engagement on the cover plate when it is urged in a direction opposite to the foregoing direction.

## Patentansprüche

1. Kupplung (10), insbesondere für Kraftfahrzeuge, für die kraftschlüssige Verbindung eines treibenden (M) und eines getriebenen (11A, 11B) rotierenden Organs mit in etwa ausgerichteten Drehachsen, umfassend:
- Mittel (24A, 24B) zur Betätigung der Kupplung (10), die einen axialen Druck in der Richtung getriebenes Organ (11A, 11 B) zum treibenden Organ (M) ausüben können, wobei sie an einem Träger (27) zur Auflage kommen, und
- ein Wälzlager (28), das dazu bestimmt ist, mit dem Auflageträger (27) einen rotierenden Deckel (12) zu verbinden, der mit dem treibenden Organ (M) verbunden ist, um an diesen Auflageträger (27) Kräfte zu übertragen, die auf den Deckel (12) einwirken, wenn die Betätigungsmittel (24A, 24B) ihren axialen Druck in der Richtung getriebenes Organ (11A, 11 B) zum treibenden Organ (M) ausüben,
**dadurch gekennzeichnet, dass** das Wälzlager (28) und der Deckel (12) komplementäre Mittel (31) zur axialen Einpassung durch Verschiebung des Wälzlagers (28) im Verhältnis zum Deckel (12) in der Richtung getriebenes Organ (11A, 11 B) zum treibenden Organ (M) umfassen, wobei die Kupplung (10) darüber hinaus Sicherungsmittel (33, 35) enthält, die der Lösung von Wälzlager (28) und Deckel (12) durch relative Verschiebung in der Richtung treibendes Organ (M) zum getriebenen Organ (11A, 11 B) entgegenwirken.

2. Kupplung (10) nach Anspruch 1, **dadurch gekennzeichnet, dass** der Deckel (12) eine Querwand (12T) umfasst, die in etwa senkrecht zu den Drehachsen des treibenden (M) und des getriebenen Organs (11A, 11 B) verläuft und als Auflagefläche für das Wälzlager (28) dient.

3. Kupplung (10) nach Anspruch 2, **dadurch gekennzeichnet, dass** die Sicherungsmittel (35) fest mit dem Wälzlager (28) verbundene radiale Sicherungsvorsprünge (33) umfassen, während die Querwand (12T) des Deckels (12) radiale Ausnehmungen (34, 34') enthält, um den Durchgang der radialen Vorsprünge (33) bei der axialen Einpassung durch Verschiebung des Wälzlagers (28) im Verhältnis zum Deckel (12) in der Richtung getriebenes Organ (11A, 11 B) zum treibenden Organ (M) zu ermöglichen.

4. Kupplung (10) nach einem der vorangehenden Ansprüche, **dadurch gekennzeichnet, dass** der Deckel (12) eine in etwa axiale ringförmige Wand (32) umfasst, in welcher das Wälzlager (28) aufgenommen werden soll.

5. Kupplung (10) nach den Ansprüchen 3 und 4 zusammengenommen, **dadurch gekennzeichnet, dass** das Wälzlager (28) bajonettartig in eine durch die ringförmige Wand (32) begrenzte Aufnahme eingesetzt ist, wobei die radialen Sicherungsvorsprünge (33) im Anschluss an die Einpassung dieser radialen Vorsprünge (33) in die radialen Ausnehmungen (34') und die relative Winkelverschiebung dieser radialen Vorsprünge (33) und radialen Ausnehmungen (34') an der Querwand (12T) des Deckels (12) zur Auflage kommen können.

6. Kupplung (10) nach Anspruch 5, **dadurch gekennzeichnet, dass** die Sicherungsmittel (35) Drehsperrmittel für das Wälzlager (28) umfassen, die die radialen Sicherungsvorsprünge (33) in einer winklig versetzten Position im Verhältnis zu den radialen Ausnehmungen (34) der Querwand (12T) des Deckels (12) halten.

7. Kupplung (10) nach den Ansprüchen 3 und 4 zusammengenommen, **dadurch gekennzeichnet, dass** die Sicherungsmittel (35) ein um die axiale Wand (32) herum angefügtes Organ (36) umfassen, das einen Kragen bildet, der sich axial zwischen den eingepassten radialen Ansätzen (33) und den radialen Ausnehmungen (34) einfügt, wobei er an der Querwand (12T) des Deckels (12) zur Auflage kommt, um eine axiale Lösung durch Verschiebung des Wälzlagers (28) im Verhältnis zum Deckel (12) in der Richtung treibendes Organ (M) zum getriebenen Organ (11A, 11B) zu verhindern.

8. Kupplung (10) nach Anspruch 7, **dadurch gekennzeichnet, dass** es sich bei dem einen Kragen bildenden angefügten Organ (36) um ein, beispielsweise geschlitztes, ringförmiges Organ handelt, das zwischen einer Ruhe- und einer Einspannkonfiguration um die ringförmige Wand (32) zur Aufnahme des Wälzlagers (28) herum elastisch verformbar ist.

9. Kupplung (10) nach Anspruch 8, **dadurch gekennzeichnet, dass** sie einen Anschlag bildende Mittel (37) umfasst, die als Spreizsperrmittel (37) bezeichnet werden und der radialen elastischen Spreizung des einen Kragen bildenden Organs (36) entgegenwirken.

10. Kupplung (10) nach Anspruch 9, **dadurch gekennzeichnet, dass** die Spreizsperrmittel (37) am Deckel (12) vorgesehen sind und beispielsweise eine ringförmige Erhebung (38) umfassen.

11. Kupplung (10) nach Anspruch 9, **dadurch gekennzeichnet, dass** die Spreizsperrmittel (37) auf den radialen Sicherungsvorsprüngen (33) für das Wälzlager (28) vorgesehen sind und beispielsweise aus umgebogenen freien Enden (39) dieser Sicherungsvorsprünge (33) bestehen.

12. Kupplung (10) nach einem der Ansprüche 3 bis 11, **dadurch gekennzeichnet, dass** das Wälzlager (28) einen Außenring (28E) umfasst, wobei die radialen Sicherungsvorsprünge (33) an diesem Außenring (28E) angebracht sind.

13. Kupplung (10) nach Anspruch 12, **dadurch gekennzeichnet, dass** der Außenring (28E) des Wälzlagers (28) aus Blech besteht, wobei die radialen Sicherungsvorsprünge (33) einstückig mit dem Außenring (28E) ausgeführt sind.

14. Kupplung (10) nach einem der vorangehenden Ansprüche, **dadurch gekennzeichnet, dass** das Wälzlager (28) einen Innenring (281) umfasst, der Befestigungsmittel (30) zur Befestigung dieses Wälzlagers (28) am Auflageträger trägt.

15. Kupplung (10) nach Anspruch 14, **dadurch gekennzeichnet, dass** der Innenring (281) des Wälzlagers (28) aus Blech besteht, wobei die Befestigungsmittel (30) vorzugsweise ebenfalls aus Blech ausgeführt sind.

16. Kupplung (10) nach Anspruch 14 oder 15, **dadurch gekennzeichnet, dass** die Befestigungsmittel (30) durch Schweißen am Innenring (281) des Wälzlagers (28) angefügt sind.

17. Kupplung (10) nach Anspruch 14 oder 15, **dadurch gekennzeichnet, dass** die Befestigungsmittel (30) durch Aufpressen am Innenring (281) des Wälzlagers (28) angefügt sind.

18. Kupplung (10) nach Anspruch 14 oder 15, **dadurch gekennzeichnet, dass** die Befestigungsmittel (30) durch Kleben am Innenring (281) des Wälzlagers (28) angefügt sind.

19. Kupplung (10) nach einem der Ansprüche 1 bis 18, **dadurch gekennzeichnet, dass** der Auflageträger (27) ein ortsfestes Gehäuse ist.

20. Kupplung (10) nach einem der Ansprüche 1 bis 18, **dadurch gekennzeichnet, dass** der Auflageträger (27) ein axial bewegliches Organ ist, das die Betätigungsmittel der Kupplung trägt.

21. Kupplung (10) nach einem der Ansprüche 1 bis 18, **dadurch gekennzeichnet, dass** der Auflageträger ein als Betätigung der Kupplung (10) dienender Hydraulikzylinderkörper ist.

22. Kupplung (10) nach einem der vorangehenden Ansprüche, **dadurch gekennzeichnet, dass** das treibende Organ (M) mit einem Rotationskolbenmotor verbunden ist.

23. Kupplung (10) nach Anspruch 22, **dadurch gekennzeichnet, dass** das treibende Organ (M) ein Schwungrad ist, das über ein Verbindungselement mit geringer Dicke mit einer Kurbelwelle des Rotationskolbenmotors des Kraftfahrzeugs verbunden ist.

24. Kupplung (10) nach Anspruch 23, **dadurch gekennzeichnet, dass** das treibende Organ (M) ein Zweimassendämpfungsschwungrad ist, das ein Primärschwungrad umfasst, das über einen Federdämpfer ein Sekundärschwungrad drehend antreibt, wobei dieses Zweimassendämpfungsschwungrad außerdem ein Zentrierlager zur Zentrierung des Sekundärschwungrads am Primärschwungrad umfasst.

25. Kupplung (10) nach einem der vorangehenden Ansprüche, **dadurch gekennzeichnet, dass** das getriebene Organ eine Getriebewelle (11A, 11 B) ist.

26. Kupplung (10) nach einem der vorangehenden Ansprüche, **dadurch gekennzeichnet, dass** das treibende Organ (M) mit dem getriebenen Organ (11A, 11 B) verbunden ist, wenn die Betätigungsmittel (24A, 24B) aktiviert sind, und das treibende Organ (M) vom getriebenen Organ (11A, 11B) getrennt ist, wenn die Betätigungsorgane (24A, 24B) nicht aktiviert sind.

27. Kupplung (10) nach einem der vorangehenden Ansprüche, **dadurch gekennzeichnet, dass** sie eine Doppelkupplung bildet.

28. Verfahren zur Montage einer Kupplung nach einem der vorangehenden Ansprüche, **dadurch gekennzeichnet, dass:**
- das Wälzlager (28) in den Deckel (12) eingesetzt wird, indem die komplementären Einpassmittel (31) durch Verschiebung des Wälzlagers (28) im Verhältnis zum Deckel (12) in der Richtung getriebenes Organ (11A, 11B) zum treibenden Organ (M) axial eingepasst werden;
- anschließend die Sicherungsmittel (35) so im Deckel (12) eingebaut werden, dass das Wälzlager (28) an diesem Deckel zur Auflage kommen kann, wenn es in der zur vorangehenden Richtung entgegengesetzten Richtung beansprucht wird.
